# EUROPEAN PATENT SPECIFICATION

(11) **EP 3 010 332 B1**
(45) Date of publication and mention of the grant of the patent: **24.07.2019**
(21) Application number: 14734953.4
(22) Date of filing: 17.06.2014
(51) Int. Cl.: G01C 3/08, G02B 1/02, A01J 5/017, A01J 7/02, G02B 27/00

(54) **METHOD AND APPARATUS FOR CLEANING AN OPTICAL DETECTION DEVICE**
VERFAHREN UND VORRICHTUNG ZUR REINIGUNG EINER OPTISCHEN ERKENNUNGSVORRICHTUNG
PROCÉDÉ ET APPAREIL DE NETTOYAGE D'UN DISPOSITIF DE DÉTECTION OPTIQUE

(30) Priority: 18.06.2013 SE 1350745
(43) Date of publication of application: 27.04.2016
(73) Proprietor: DeLaval Holding AB, 147 21 Tumba (SE)
(72) Inventor: HOLMERTZ, Nils-Erik, S-147 21 Tumba (SE)
(74) Representative: Lilliehorn, Tobias
(86) International application number: PCT/SE2014/050738
(87) International publication number: WO 2014/204391

(56) References cited:
- WO-A1-03/077645
- WO-A1-2012/149099
- WO-A1-2013/081544
- RU-C2- 2 244 417
- RU-C2- 2 473 211
- SU-A1- 1 777 728

## Description

### Technical Field

The present invention relates to the cleaning of windows and lenses of optical equipment used in contaminated environments and has particular relevance to cleaning of windows and lenses of equipment used in automatic or semiautomatic milking systems.

### Background

An optical detection arrangement, such as is commonly used in automatic milking systems, typically includes a detector in the form of a diode detector or CCD array camera for detecting radiation that is emitted or reflected from an object of interest, and using the detected radiation to determine the distance between the object and the detector. Some systems may also have a radiation source, for example, a laser, used to illuminate objects of interest with suitable radiation. In most cases, the radiation detector and source, if present, are arranged in a housing behind a screen or window that protects the camera or diode from surrounding pollution. The window may be made of glass or other suitably transparent material through which visible light or other radiation can pass substantially without attenuation. In order for an optical detection system of this kind to operate reliably, it is important that the transmission of radiation through the window is not blocked by deposits such as dirt, dust milk or water. Deposits of any kind reduce the amount of optical radiation that can reach the detector and, in systems containing a source of radiation for illuminating an object, may also prevent an object from being illuminated adequately.

A particular challenge in a milking parlour is the extent and range of contaminants that are present. These include urine, manure, milk, dust, hair and also mineral deposits, such as limescale, and disinfectant or cleaning solutions. In present-day automatic milking parlours, where teat cups are connected to an animal's teats automatically, optical detectors are commonplace for detecting the presence of an animal and specifically for determining the position of the teats. The optical detectors are often located close to the teats of an animal, which implies a position that is close to the floor of the milking parlour. As a consequence, all the above contaminants may land on the optical detector and its window.

Existing systems have cleaning devices either provided separately from the detectors or connected to the detector window for washing or wiping the window surface and in some cases drying the protective window with compressed air. For example, EP-A-0688498 describes a cylindrical optical detector used in a milking arrangement that has a sliding cover adapted to move over a window. The cover is equipped with a sponge that is wetted by a cleaning liquid. As the cover slides over the window, the window is wiped by the sponge. US 4,843,561 describes an agricultural harvester with an imaging devices in the form of cameras. These cameras are cleaned by means of a sprayer that sprays cleaning solution and wiper blades that automatically wipe a glass cover that protects the camera. A problem with known arrangements is that over time thin films can build up on the detector window or lens, which impede the detection process. Particularly in environments such as a milking parlour, where contaminants include milk, urine and manure, a thin film of fat or protein deposits can persist, which ultimately degrades the detector operation.

WO 03/077645 discloses cleaning methods in a milking system, inter alia sterilization of a robot arm by insertion into a docking station, and supply of steam to the docking station. A front portion of the robot arm, a gripper, and a camera are sterilized in the docking station.

WO 2012/149099 discloses a milking system including a robotic attacher comprising a supplemental arm operable to extend into a stall portion of a milking box. A camera couples to the supplemental arm. The supplemental arm comprises a camera-facing nozzle operable to spray the camera with a cleanser.

WO 2013/081544 discloses a milking system comprising an arrangement for cleaning the lens of the camera.

In view of the drawbacks of the above arrangements and methods, it is an object of the present invention to provide a cleaning arrangement for an optical device that is highly effective over time.

### Summary

In accordance with the present invention, this object is achieved in a milking system according to claim 1 that includes an optical detector for detecting radiation emitted and/or reflected by at least part of an animal, the detector having a housing with a window that is substantially transparent to said radiation. The milking arrangement further includes a cleaning device for cleaning the window of the detector. The cleaning device comprises at least one nozzle connected to a source of steam, wherein in operation the nozzle of the cleaning device is configured to direct steam against the window of said optical detector. Moreover, said cleaning arrangement further comprises a pre-rinsing arrangement configured to apply water to said detector window before the application of steam.

It has been discovered by the inventor that directing steam via one or more nozzles onto a window is a highly effective manner of cleaning the window as it offers the combined functions of heating and rinsing but without the inherent drawbacks associated with other cleaning fluids as it is free from impurities and importantly from minerals that can leave deposits and residue on the window, which, over time, may degrade the operation of the optical detector. In this regard it is to be noted that once steam is exposed to atmospheric pressure upon release from a nozzle it is no longer strictly speaking steam, but rather hot vapour. Yet this vapour, unlike heated water, is free from all impurities. For the purposes of this disclosure the term "steam" is used both for steam and vapour.

In a particularly preferred embodiment, the milking system further comprises a controller that is configured to control both the operation of the cleaning arrangement and of the optical detector. This enables the correct sequencing of the associated functions that ensures that the cleaning of the detector window is carried out with minimum disruption and in safe manner that excludes all risk of injury to animals or operators. The milking system may further be arranged to comprise a milking robot with at least one robot arm that is configured to move under the control of a controller, wherein said optical detector is mounted on said robot arm.

According to one embodiment, the controller is configured to control the supply of steam to the cleaning arrangement for a predetermined period prior to applying steam to the optical detector window to purge condensation from said cleaning arrangement. By forcing steam through the nozzle or nozzles of the cleaning arrangement for a certain limited time prior to the cleaning operation, it is ensured that the temperature of the steam used for cleaning is at the optimum level so that the steam has sufficient energy for cleaning the detector window.

While the use a single nozzle is entirely adequate to expose the whole window surface to steam, particularly, when the detector is moved relative to the nozzle throughout the cleaning process, it is equally possible for the cleaning device to comprise at least two nozzles disposed a predetermined distance apart such that in operation the nozzles generate an overlapping jet of steam. By providing such an overlapping steam jet, the coverage of the window can be improved and it is thereby ensured that the whole surface of the detector window is subject to the same degree of cleaning efficiency. This may also be achieved when at least one nozzle is configured to move during the application of steam to said optical detector.

In order to provide an even distribution of steam over the surface of the optical detector window, and thus ensure a uniform heating effect over the whole window it is preferably when the nozzle or nozzles are oriented such that, in operation, an axial extension of the nozzle or nozzles is substantially at right-angles to the optical detector window. This then minimises the localised overheating of any area and ensures a uniform cleaning result.

In a particularly advantageous arrangement the cleaning arrangement further comprises a drying arrangement for drying the detector after the application of steam. Providing such a drying arrangement in the cleaning arrangement enables any water droplets remaining on the window surface after cleaning to be removed immediately, so that the optical detector can be put back into operation with the minimum delay.

In a particularly advantageous embodiment, the drying arrangement includes an air supply arrangement for supplying compressed air to the detector window. The use of compressed air to force water droplets away from the window surface not only dries the window rapidly, but also cools both the window and the optical detector housing, so ensuring that the components within the optical detector remain safely within the operating temperature range, while also minimising any risk of injury to animals or operators who may inadvertently come into contact with a hot detector.

In a particularly advantageous embodiment, the drying arrangement is configured to supply compressed air to the at least one nozzle. In other words the same nozzles are used for supplying both steam and air, which greatly simplifies the cleaning arrangement.

According to the invention, the cleaning arrangement further comprises the pre-rinsing arrangement for applying water to said detector window before the application of steam. It has been discovered that rinsing the window prior to cleaning with steam is effective for removing milk protein that can become denaturised when heated and adhere to the surface of the window. This means that the steam applied to the window subsequently can be at a higher temperature than other wise, for example by placing the nozzles closer to the window surface. The rinsing water is preferably purified or distilled water, which is free from minerals and thus would not add to the contamination of the window. The water is also preferably unheated, or heated to a temperature below 60°C.

In a further embodiment, the milking system comprises a milk box for accommodating an animal to be milked, wherein said cleaning arrangement is located at a position outside the milk box. In this regard, the term milk box refers equally to stand-alone stalls in which an individual animal is milked fully or partially automatically, as well as to pens, bays or milking positions in milking parlours that accommodate several animals at a time, including rotary parlours or the like.

In a still further embodiment, the cleaning arrangement is arranged at a position adjacent the optical detector. In this arrangement, the optical detector does not need to be moved to and from the cleaning arrangement.

The invention further resides in a method of cleaning the window of an optical detector that forms part of a milking system as defined in the appended claims and as described further below.

More specifically, a method according to claim 8 of cleaning the window of an optical detector that forms part of a milking system is proposed, wherein the optical detector is arranged to detect radiation emitted and/or reflected at least in part by at least part of an animal, and comprises a housing with a window that is substantially transparent to the radiation. The method comprises: cleaning the window by directing steam towards the window from at least one nozzle oriented towards the window, and rinsing said window with water prior to directing steam towards said window. As discussed above the present inventor has discovered that applying steam to the window has proven particularly effective at removing contamination in particular oily films that have a tendency to build up over time on equipment that is exposed to contamination in a dairy environment.

The nozzle or nozzles are preferably oriented at right-angles to window surface in order to ensure uniform application of steam and thus heat. The uniform application of steam and thus of heat can be still further enhanced when the method includes effecting a relative movement between the detector window and the at least one nozzle while directing steam against the window.

In order to reduce the time for cleaning the detector window it is preferable when the window is dried after directing steam towards said window. Once the window is dried it can be put into operation immediately. Drying may be done mechanically, such as using a wiper or cloth. Preferably, however, the method includes drying the window by directing compressed air towards the window.

The method comprises rinsing the window with water prior to directing steam towards said window. This pre-rinsing step aids the removal of milk proteins, which could become denaturised when exposed to the steam cleaning step and adhere to the window surface. By removing these proteins before steam cleaning, the temperature of the steam can be hotter than permitted otherwise, which may improve the cleaning and/or reduce the time needed to clean. The water used for rinsing is preferably purified or distilled water.

The method further comprises the step of evacuating condensed water from the nozzles prior to directing steam towards said window. The supply of steam to a cool nozzles and a cool supply pipeline will result in condensation forming that results in water being forced out of the nozzle or nozzles before steam is issued. This evacuation step may be used as the pre-rinsing step, provided that the condensed water is sufficiently cool, and specifically below about 60°C.

### Brief description of the drawings

Further objects and advantages of the present invention will become apparent from the following description of the preferred embodiments that are given by way of example with reference to the accompanying drawings. In the figures:
- Fig. 1: schematically illustrates parts of a milking stall with an automatic milking system in accordance with an embodiment of the present invention,
- Fig. 2: schematically illustrates an optical detector
- Fig. 3: schematically illustrates a partial sectional view of a cleaning device for cleaning a detector window viewed from above in accordance with an embodiment of the invention,
- Fig. 4: schematically shows a partially sectional view of the cleaning device of Fig. 2 in operation viewed from the side, and
- Fig. 5: schematically illustrates a partial sectional side view of an optical detector with integrated cleaning device for cleaning a detector in accordance with a further embodiment of the invention.

### Detailed description

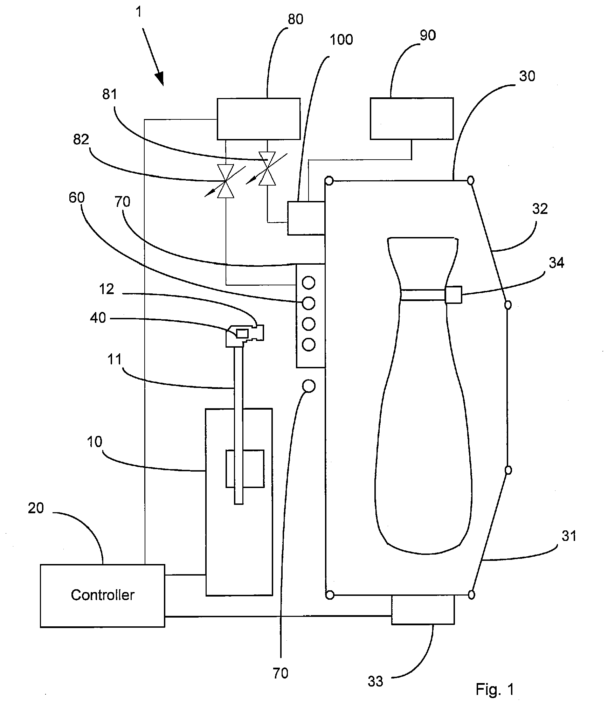

Fig. 1 depicts a milking system, which in the exemplary embodiment includes a milking robot 1 disposed adjacent a milk box 30 for retaining an animal to be milked. The milk box 30 is essentially constructed of metal rails arranged to form an enclosure that is suitable for confining a cow, and includes an entrance gate 31 and an exit gate 32 via which the animal can access and leave the milk box 30. An identification device 33 is mounted on or near to the milk box 30 close to the entrance gate 31. This device 33 retrieves an identification code associated with an animal by detecting or interrogating a transponder 34 that is carried by the animal, for example on a collar, and holds a unique identification code assigned to the animal. The milking robot 1 includes a robot arm construction 10 as well as a number of other components not shown in the figure but conventionally present in this type of arrangement. These components typically include, but are not limited to, milk and pulsation lines and associated elements of the milk and vacuum circuits, such as collecting jars and regulator valves, flow and vacuum sensors and physiological sensors, which may include conductivity and temperature sensors, among others.

A set of four teat cups 50 connected to milk lines (not shown) are provided in a magazine located beside the robot arm construction 10 within easy reach of the same. Integrated in this teat cup magazine is a teat cup cleaning arrangement 70 for cleaning and disinfecting the teat cups after use. The teat cup cleaning arrangement 70 is connected to a source of steam, such as a boiler 80 via a pipeline and valve 82. This arrangement includes four nozzles over each of which a teat cup 50 can be supported. Each of the nozzles has openings via which steam is supplied to clean and disinfect the teat cup 50. A washing cup 60 for washing an animal's teats one by one is also shown in its rest position arranged beside the robot arm construction. While only one washing cup 60 is illustrated, it will be understood by those skilled in the art that two or more washing cups 60 may be provided to wash more than one teat simultaneously. The structure and function of the teat cups 60 and washing cups 70 are well known to one of ordinary skill in the art and will thus not be described further. The robot arm construction 10 includes a robot arm 11 that is movable both vertically and horizontally and also rotationally to enable it to be moved into one or more precise positions under an animal present in the milk box 30 and also withdrawn to various positions at the side of the milk box 30, including the illustrated rest position. The robot arm 11 carries a gripper 12 at its end which, in the illustrated embodiment, comprises an electromagnet that can be energised to pick up a teat cup 50 or the cleaning cup 60 and de-energised to release the teat and cleaning cups 50, 60. To this end, the teat cups 50 and cleaning cups 60 are provided with an outer casing that is magnetic or is provided with a strip of magnetic material. It will be understood, however, that other systems could replace the electromagnet. For example, opening and closing mechanical elements for physically gripping the teat cups and cleaning cups, or a cup-like element for cradling each teat cup could be employed equally well here.

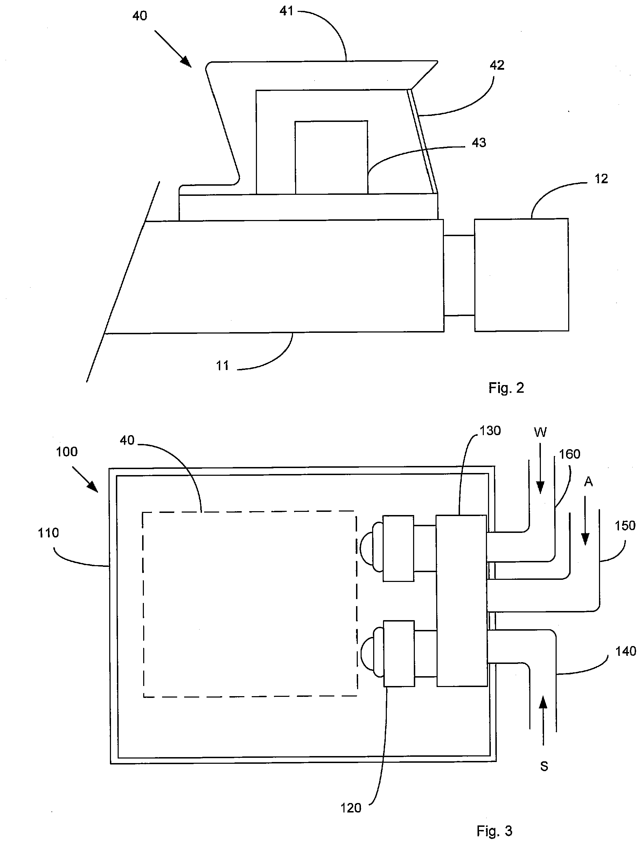

At the end of the robot arm 11, slightly behind and above the gripper 12, there is arranged an optical detector 40 for detecting and determining the position of the teats of an animal to be milked. In an alternative embodiment, the detector 40 can be arranged on a separate robot arm that is moved independently of the robot arm 11 carrying teat cups. One or more detectors 40 could alternatively be located at a substantially fixed position outside or at the edge of the milk box 30. Also located at the side of the milk box 30 is a cleaning device 100 for cleaning the optical detector. The location of this device 100 is such that the optical detector 40 can be moved into or under this cleaning device 100 using the robot arm 11. The cleaning device 100 is connected to the boiler 80 to receive steam via pipeline and valve 81 and to a compressor 90 for compressed air. Although not illustrated specifically in Fig. 1, the cleaning device 100 may also be connected to a source of water (see Fig 3).

A controller, generally indicated by black box 20, controls the operation of the milking robot 1. As illustrated in Fig. 1, controller 20 is connected to the robot arm construction 10, the identification device 33 and the steam source 80 via wired or wireless connections. It will be appreciated that other connections may also be present, for example to actuators controlling the opening and closing of the gates 31, 32 and to a range of sensors providing information on the state of various components of the milking robot and surrounding equipment. The controller 20 controls functions of the robot arm 11, the detector 40, the detector cleaning device 100, the teat cup cleaning arrangement 80 as well as the various elements of the milking robot required for milking, such as the application of a vacuum to the milk lines and pulsation lines for connection and disconnection of the cleaning cup 60 and teat cups 50 and for milking, the supply of cleaning and rinsing fluid to teat cups 50 and/or cleaning cup 60, the monitoring of the vacuum and milk flow by means of appropriate sensors and monitoring of the milk quality and health of the cow by means of physiological sensors. The controller 20 may also store information concerning each of the animals served by the milking system and use this information to regulate access to and through the milk box 30 by controlling the identification device 33 and the operation of the entrance and exit gates 31, 32. The controller 20 is preferably embodied by a CPU with associated memory but may be constituted by one or more computers linked together either by wired or wireless connections or via an external network.

The detector 40 is used to generate image or distance data which the controller 20 can subsequently use establish the position of an animal's udder and/or of the individual teats relative to a known position. This is then used to guide the robot arm 11 in a number of operations, such as cleaning the teats, attaching teat cups 60, or effecting an after-treatment. While that detector 40 could determine the positions of the teats relatively quickly, an animal will rarely stay completely still, so that the position of the teats shifts constantly. For this reason, the detector 40 is often used to track the teat positions continuously until the operation in question is completed. An embodiment of the detector 40 is illustrated schematically in more detail in Fig. 2, which shows a partial cross-sectional view. The illustrated detector 40 is a box-like structure of substantially rectangular cross-section. The top surface and four side surfaces of the detector 40 are constituted by a housing 41. The housing 41 includes a window 42 in one of the side surfaces. The window 42 is translucent and substantially transparent to the radiation detected by the detector 40. Suitable materials for the window 420 include toughened glasses, such as sapphire glass (Al₂O₃), Alkali-Aluminiosilicate (Al₂SiO₅) and plastics. It is to be understood that the term "window" as used in this disclosures refers both to substantially planar or curved sheets of material that have no intentional optical properties, and to lenses that are an integral part of the optical instrument. The remaining parts of the housing 41 are opaque to the radiation in question. Behind the window 42 within the housing 41 there is located a detecting element 43, which may include one or more photo diodes or a CCD array or camera. The detecting element 43 is sensitive to a specific frequency or frequency band of radiation emitted or reflected from objects located in front of the window 420. The detecting element 43 may be sensitive to visible light, preferably, however, it is sensitive to infrared radiation. Additionally, there may be provided a light source (not illustrated), such as a laser source for emitting radiation of the required frequency for illuminating the objects to be detected. The top surface of housing 41 projects beyond the window to form a lip. This lip protects the window surface 42 from dirt falling from above and also prevents the window 42 from coming into contact with any part of the animal, specifically the udder and teats of an animal. Although not illustrated in the figure, the side walls of the housing 41 adjacent the window 42 preferably also extend outwardly beyond the surface of the window 42 to provide additional lateral protection from damage and contamination. In the illustrated arrangement, the detector 40 is shown mounted on robot arm 11.

The detector 40 is constantly exposed to contamination. Typical contaminants include airborne dust and water vapour, mud, manure, urine, water and cleaning liquid splashes, hair and milk. Its arrangement in proximity to the floor and on a robot arm that is moved close to or under the teats of an animal means that the detector window 42 will at some time become spattered with dirt, while airborne contaminants such as dust and water vapour tend to settle on the window as a film. Dried droplets of water can also result in mineral deposits. In addition, the fat contained in milk has a tendency to form a fatty residue over time that is difficult to remove. Yet it is essential for the correct operation of the detector 40, and thus for the correct guidance of the robot arm, that the detector window 42 should not become obscured and impede the transmission of light. In accordance with the present invention, the detector window is cleaned effectively, hygienically and with minimum impact on the environment by using steam.

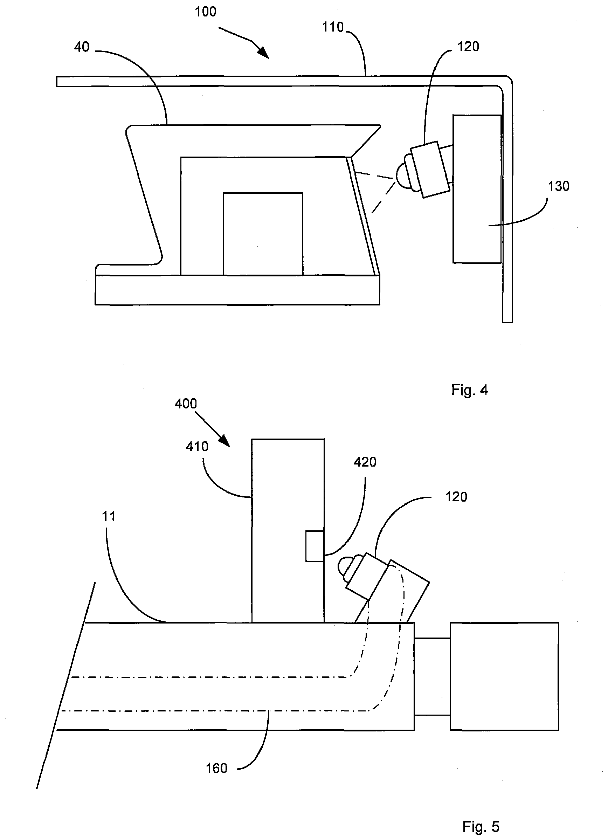

Figs. 3 and 4 show two views of a detector cleaning arrangement 100 in accordance with an embodiment of the invention. In fig. 3 the cleaning arrangement 100 is viewed from above and partially cut-away. Fig. 4 shows the same arrangement again partially cut away but from one side. The cleaning arrangement 100 includes a frame 110, which has a protective cover attached to at least one side wall on which are attached nozzles 120. Two nozzles 120 are shown side by side, each extending in a vertical plane that is essentially orthogonal to the frame wall 110. The position of a detector 40 is also indicated with a dashed line. As is shown in Fig. 4, the nozzles 120 are also inclined downwardly. This downward inclination ensures that steam can be applied over substantially the whole surface of the inclined detector window 42 without significant differences in the distance it travels, so ensuring that only a slight variation in temperature occurs. Preferably, the nozzles are disposed such that the direction of flow of steam is essentially normal, i.e. at 90°, to the surface to be cleaned. It will be understood that when applied to surfaces with a different inclination, the orientation of the nozzles can be changed accordingly. The spacing between the nozzles 120 and the distance between the nozzles 120 and the detector window 42 are selected to achieve an overlapping stream of steam at the window surface. In general the distance between the nozzles the detector window 42 should not exceed 35mm and this distance should be substantially the same as the spacing between the centers of the nozzles 120. The nozzles 120 are mounted on a valve block 130 which is, in turn, connected to the boiler, designated by "S", via pipeline 140 and to a source of pressurised air, designated by "A", via pipeline 150. The pressurised air is used to dry the detector window 42 after it has been cleaned with steam. The valve block 130 is also connected via pipeline 160 to a source of water, designated by the letter "W". The water is optionally used to rinse the window before applying steam. The purpose of rinsing the window before applying steam is to ensure that any contamination containing milk proteins are removed prior to the heating of the window. More specifically, certain proteins contained in milk, specifically β-lacto globulin, can be denatured by the heat and subsequently adhere to the window surface. Simply rinsing the window beforehand with cold or warm water provides a simple and effective way of reducing this risk. This also allows steam of a higher temperature to be used subsequently, for example by reducing the distance between the detector window 42 and nozzles 120 during cleaning. While in the illustrated embodiment, the same nozzles 120 are used to supply water, steam and air, it will be understood that water could be supplied via separate conduits and ducts, possibly by conduits and apertures incorporated in the detector housing 41. The valve block 130 is controlled by controller 20 to switch the nozzles between the water, steam and air pipelines 140, 150, 160 in order to apply selectively water, steam or compressed air to the detector window 42. Steam should be applied to all of the window surface 42, and hence the detector 42 should be moved upwardly relative to the nozzles 120 by raising the robot arm 11 during cleaning. It may also be necessary to effect a lateral movement to ensure the even distribution of steam over the surface. This movement should also be performed when pre-rinsing with water, then be repeated for the application of compressed air to clear the window of any water droplets remaining after the application of steam.

While the application of steam has been found to clean all impurities that are likely to be present on a detector window 42, it is important to limit the heating effect produced when cleaning. This is due to the need to prevent the various optical and electronic components contained in the detector housing 41 from being heated to or above the maximum recommended operating temperature. This depends partly on the thickness of the detector window and the material of this window, but the temperature of the steam applied to the window 42 and the length of time it is applied must be limited. The application of compressed air to the window 42 also has a cooling effect that can prevent much of the surface heat being transmitted to the inside of the detector housing.

The boiler 80 produces wet or saturated steam. By wet steam is meant saturated steam, namely steam that in equilibrium with heated water and which has not been heated past the boiling point at its pressure. This differs from dry stream or superheated steam, which contains only gas, and a small loss in temperature does not produce condensation. The steam in the boiler heated to 158°C at a pressure of between 5.5 and 6 Bar. The boiler 80 may also be used to provide steam for disinfecting the teat cups 60. When the steam is released from the nozzles 120 where it is retained under pressure, it will expand under atmospheric pressure and thus attain a temperature no higher than 100°C. Strictly speaking the steam is no longer steam when it reaches the detector window 42 but instead will have been converted to the liquid phase and can better be described as hot vapour. For the purposes of this disclosure however, the term steam will be used for both steam and vapour that is issued from the nozzles 120 when connected to boiler 80. By the time it impacts on the detector window 42, the temperature of the steam will have dropped by an amount that depends on the distance between the nozzles 120 and the window 42 as well as the ambient temperature. It is important to note that the use of steam from boiler 80 ensures that the low temperature steam or hot vapour will contain no impurities or minerals and thus, unlike heated water, will not leave residues on the window surface 42.

While in the illustrated embodiment two nozzles 120 arranged in a fixed position are shown, it will be understood that more nozzles 120 may be provided. Similarly, a single nozzle appropriately spaced may also achieve a sufficient cleaning effect. It is further contemplated that one or more nozzles can be mounted on a movable support that moves the nozzle or nozzles so that the steam sweeps across the surface of the detector window. In such an arrangement there would be no need to move the detector 42.

By means of the relative movement of the detector 42 and nozzles 120 it is ensured that heat is spread over the window surface thus limiting the localised heating effect. This may limit the effects of thermal shock and also prevent residues that may occur when milk proteins present on the detector window are denatured by the heat and adhere to the surface. However, it is also possible to provide an arrangement of nozzles 120 that provide and overlapping steam supply capable of covering the entire window surface 42. In this case, the time needed to supply steam would be shorter, again to minimise the heating of the detector 42.

It has been found that saturated steam provides the best cleaning effect by simultaneously heating and rinsing away impurities, however, any drop in temperature of the steam causes water droplets to condense out. When steam is first applied to pipeline 130 via valve 81 required for cleaning a detector, the temperature of the steam drops within the pipeline 81 causing condensation, which means that initially the nozzles will spray water. In order to remove the condensed water droplets from pipeline 81 and to heat the pipeline sufficiently to prevent further condensation, steam must be supplied from boiler 80 to nozzles 120 for a period before the detector window is in place for cleaning. The longer this pre-heating period, the higher the temperature of the steam, but the more steam wasted. Clearly this will depend on the ambient temperature as well as the length of the pipeline 81. In general, it is believed that a period of between 2s and 20s is sufficient to achieve an acceptable steam temperature in the nozzles 120 to clean the detector window 42 effectively. The condensed steam emitted from the pipeline 130 and nozzles 120 may be used to pre-rinse the window, provided that the initial temperature of this water is below around 60°C. In this case, there would be no need to provide the additional pipeline 160 connected to a separate source of rinsing water.

In operation, when the detector window 42 is to be cleaned, the controller 20 initially effects the pre-rinsing of the window surface 42. This may be achieved by controlling the robot arm 11 to bring the detector 40 into a cleaning position in the detector cleaning arrangement 100 and connecting the nozzles 120 to a source of rinsing water. Alternatively, the controller 20 opens the supply of steam to the nozzles 120 of the cleaning arrangement 100 and allows steam to flow for a certain period of time to remove any condensed water that may have collected in the pipeline. The steam then continues to flow for the designated cleaning period, which may be between 2s and 25s, after which the supply to pipeline 130 is cut via valve 81 and the nozzles are connected to the compressor 90 via pipeline 140 again for a predetermined period, but preferably between 10 and 30s until the detector window 42 is dry and the detector housing 41 cooled. During the pre-rinsing, steaming and drying periods, the controller 20 controls the movement of the robot arm such that all the window surface 42 rinsed, cleaned and dried substantially uniformly.

Fig. 5 illustrates a robot arm 11 with a detector 400 and integrated detector cleaning arrangement 100. The detector 400 in this embodiment is constituted by a time of flight (TOF) camera, which permits a 3 dimensional image to be generated using a single image by emitting light pulses and for each pixel determining the time for light to be reflected back from an object. Cameras of this kind are well-known in the art and will not be described in more detail here. As for the arrangement of Fig. 2, the detector 400 is mounted on the robot arm 11, which also holds gripper 12. Mounted on the robot arm is also a nozzle 120, which in this case is inclined upwardly towards the detector window 420. The nozzle is connected to a steam hose 170, which is indicated by a dashed line and which is held in or against the robot arm 11. The steam hose 170 connects to the boiler 80. A similar non-shown conduit for compressed air is also provided, which connects to the same nozzle 120 or to a second nozzle for drying and cooling the detector after cleaning. As in this embodiment the steam nozzle 120 will be carried together with the detector 400 to positions in proximity to animals, the controller 20 controls the supply of steam to the nozzle 120 only when the robot arm is in a position outside the milk box 30 to prevent injury. As the nozzle and detector will be hot after cleaning, it is preferred that compressed air is supplied via the same nozzle 120 or an adjacently arranged nozzle 120 for a minimum time to ensure the cooling of the equipment to a safe temperature. In the illustrated embodiment the nozzle 120 is fixed in position, which means that an axial elongation of the nozzle will be inclined from the normal relative to the window surface 420. In other words, the axial elongation of the nozzle 120 will not be oriented at the preferred angle of substantially 90° to the window surface, since this would obscure the field of vision. This preferred angle could be obtained by mounting the nozzle 120 or nozzles on a movable support that enables the positioning of the nozzles 120 directly in front of the window 420 for cleaning, possibly with a movement over the surface of the window 420 and then retracted to a rest position out of the field of view when cleaning is terminated. In this case, the pre-heating of the hose and evacuation of condensation could be performed in the retracted position to prevent excessive water being sprayed on the detector 420 and robot arm 11. The retracted position could also provide a protective cover over the nozzle or nozzles 120 to prevent a hot nozzle 120 causing accidental injury to an animal.

In both illustrated embodiments of the cleaning arrangement 100 compressed air is used to dry the detector window 42, 420. However, since the steam is free of impurities and minerals commonly present in water, other drying devices could be employed that can effectively remove any water droplets from the detector 42, 420. Possible devices include mechanical wipers constituted by flexible blades, cloths or sponges that are capable of scraping or wiping away residual water.

It will be understood that the described arrangement can be applied to other milking arrangements that require the use of optical detectors. In this regard, it is noted that optical detectors may be employed for other tasks than determining the positions of the teats of an animal. For example, they may be used to determine the position of an animal relative to equipment, to identify animals that show certain behaviour that may indicate illness, an injury or fertility. Optical detectors in the form of cameras may also be used to provide remote monitoring of an installation. The cleaning arrangement described above can be applied to any of these systems. Similarly, a milking system is not limited to the illustrated embodiments, but may also include systems in which some of the operations are performed by operators, but also systems in which several animals are milked collectively, such as rotary systems or collective milking parlours.

**Reference numerals**

| | | | |
|---|---|---|---|
| 1 | Milking robot | 80 | Steam source/Boiler |
| 10 | Robot arm construction | 81 | Valve |
| 11 | Robot arm | 82 | Valve |
| 12 | Gripper | 90 | Compressor |
| 20 | Controller | 100 | Detector cleaning arrangement |
| 30 | Milk box | 110 | Frame |
| 31 | Entrance gate | 120 | Nozzle |
| 32 | Exit gate | 130 | Valve block |
| 33 | Identification device | 140 | Steam pipeline |
| 34 | Transponder | 150 | Compressed air pipeline |
| 40 | Optical detector | 160 | Pre-rinsing water pipeline |
| 41 | Detector housing | 170 | Integrated steam hose |
| 42 | Detector window | 400 | Detector |
| 43 | Detector element | 410 | Detector housing |
| 50 | Teat cups | 420 | Detector window |
| 60 | Cleaning cup | | |
| 70 | Teat cup cleaner | | |

## Claims

1. A milking system including:
an optical detector (40; 400) for detecting radiation emitted and/or reflected by at least part of an animal, said detector having a housing (41; 410) with a window (42; 420) that is substantially transparent to said radiation,
said milking arrangement further includes a cleaning device (100) for cleaning the window (42; 420) of said detector,
**characterised in that**
said cleaning device comprises at least one nozzle (120) connected to a source of steam (80), wherein in operation the nozzle (120) of said cleaning device is configured to direct steam against the window of said optical detector (40), and
wherein said cleaning arrangement (100) further comprises a pre-rinsing arrangement (160; 120; 80) configured to apply water to said detector window (42; 420) before the application of steam.

2. A milking system as claimed in claim 1, further comprising a controller (20) configured to control the operation of said cleaning arrangement (100) and of said optical detector (40; 400).

3. A milking system as claimed in claim 2, further comprising a milking robot with at least one robot arm (11) that is configured to move under the control of said controller (20), wherein said optical detector (40) is mounted on said robot arm.

4. A milking arrangement as claimed in claim 2 or 3, wherein said controller is configured to control the supply of steam to said cleaning arrangement (100) for a predetermined period prior to applying steam to said optical detector window (42;420) to purge condensation from said cleaning arrangement (100).

5. A milking system as claimed in any previous claim, wherein said cleaning device (100) comprises at least two nozzles (120) disposed a predetermined distance apart such that in operation said nozzles generate an overlapping jet of steam.

6. A milking system as claimed in any previous claim, wherein said at least one nozzle (120) is configured to move during the application of steam to said optical detector (40).

7. A milking arrangement as claimed in any previous claim, wherein said at least one nozzle is oriented such that, in operation, an axial extension of said at least one nozzle is substantially at right-angles to said optical detector window (42; 420).

8. A method of cleaning the window of an optical detector that forms part of a milking system, wherein said optical detector is arranged to detect radiation emitted and/or reflected at least in part by at least part of an animal, and comprises a housing (41; 410) with a window (42; 420) that is substantially transparent to said radiation, the method comprising:
cleaning said window by directing steam towards said window from at least one nozzle oriented towards said window, and
rinsing said window with water prior to directing steam towards said window.

9. A method as claimed in claim 8, further comprising, orienting said nozzles at right-angles to window surface.

10. A method as claimed in claim 8 or 9, further comprising effecting a relative movement between the detector window and the at least one nozzle while directing steam against the window.

11. A method as claimed in any one of claims 8 to 10, further comprising:
drying said window after directing steam towards said window.

12. A method as claimed in any one of claims 8 to 11, wherein said rinsing step includes rinsing said window with purified water.

13. A method as claimed in any one of claims 8 to 12, further comprising evacuating condensed water from said nozzles prior to directing steam towards said window.

## Patentansprüche

1. Melksystem, das Folgendes einschließt:
einen optischen Detektor (40; 400) zum Erfassen von Strahlung, die von wenigstens einem Teil eines Tieres emittiert und/oder reflektiert wird, wobei der Detektor ein Gehäuse (41; 410) mit einem Fenster (42; 420) aufweist, das für die Strahlung im Wesentlichen transparent ist, wobei die Melkanordnung ferner eine Reinigungsvorrichtung (100) zum Reinigen des Fensters (42; 420) des Detektors einschließt, **dadurch gekennzeichnet, dass** die Reinigungsvorrichtung wenigstens eine Düse (120) umfasst, die mit einer Dampfquelle (80) verbunden ist, wobei die Düse (120) der Reinigungsvorrichtung in Betrieb konfiguriert ist, um Dampf gegen das Fenster des optischen Detektors (40) zu richten, und wobei die Reinigungsanordnung (100) ferner eine Vorspülanordnung (160; 120; 80) umfasst, die konfiguriert ist, um vor dem Anwenden von Dampf Wasser auf das Detektorfenster (42; 420) anzuwenden.

2. Melksystem nach Anspruch 1, das ferner eine Steuervorrichtung (20) umfasst, die konfiguriert ist, um den Betrieb der Reinigungsanordnung (100) und des optischen Detektors (40; 400) zu steuern.

3. Melksystem nach Anspruch 2, das ferner einen Melkroboter mit wenigstens einem Roboterarm (11) umfasst, der konfiguriert ist, um sich unter der Steuerung der Steuervorrichtung (20) zu bewegen, wobei der optische Detektor (40) auf dem Roboterarm befestigt ist.

4. Melkanordnung nach Anspruch 2 oder 3, wobei die Steuervorrichtung konfiguriert ist, um die Zufuhr von Dampf zu der Reinigungsanordnung (100) für eine vorbestimmte Zeitdauer zu steuern, bevor Dampf auf das optische Detektorfenster (42; 420) angewendet wird, um Kondensation aus der Reinigungsanordnung (100) zu entfernen.

5. Melksystem nach einem der vorhergehenden Ansprüche, wobei die Reinigungsvorrichtung (100) wenigstens zwei Düsen (120) umfasst, die in einem vorbestimmten Abstand voneinander angeordnet sind, sodass die Düsen in Betrieb einen sich überlappenden Dampfstrahl erzeugen.

6. Melksystem nach einem der vorhergehenden Ansprüche, wobei die wenigstens eine Düse (120) konfiguriert ist, um sich während des Anwendens von Dampf auf den optischen Detektor (40) zu bewegen.

7. Melkanordnung nach einem der vorhergehenden Ansprüche, wobei die wenigstens eine Düse ausgerichtet ist, sodass eine axiale Ausdehnung der wenigstens einen Düse in Betrieb im Wesentlichen in einem rechten Winkel zu dem optischen Detektorfenster (42; 420) ist.

8. Verfahren zum Reinigen des Fensters eines optischen Detektors, der einen Teil eines Melksystems ausbildet, wobei der optische Detektor angeordnet ist, um wenigstens zum Teil von einem Tier emittierte und/oder reflektierte Strahlung zu erfassen, und ein Gehäuse (41; 410) mit einem Fenster (42; 420), umfasst, das im Wesentlichen transparent für die Strahlung ist, wobei das Verfahren Folgendes umfasst:
Reinigen des Fensters durch Richten von Dampf zu dem Fenster hin von wenigstens einer Düse, die zu dem Fenster hin ausgerichtet ist, und Spülen des Fensters mit Wasser vor dem Richten von Dampf zu dem Fenster hin.

9. Verfahren nach Anspruch 8, das ferner ein Ausrichten der Düsen in einem rechten Winkel zu einer Fensteroberfläche umfasst.

10. Verfahren nach Anspruch 8 oder 9, das ferner ein Bewirken eines relativen Bewegens zwischen dem Detektorfenster und der wenigstens einen Düse umfasst, während Dampf gegen das Fenster gerichtet wird.

11. Verfahren nach einem der Ansprüche 8 bis 10, das ferner Folgendes umfasst:
Trocknen des Fensters nach dem Richten von Dampf zu dem Fenster hin.

12. Verfahren nach einem der Ansprüche 8 bis 11, wobei der Spülschritt das Spülen des Fensters mit gereinigtem Wasser einschließt.

13. Verfahren nach einem der Ansprüche 8 bis 12, das ferner ein Abpumpen von kondensiertem Wasser von den Düsen vor dem Richten von Dampf zu dem Fenster hin umfasst.

## Revendications

1. Système de traite comprenant :
un détecteur optique (40 ; 400) permettant de détecter un rayonnement émis et/ou réfléchi par au moins une partie d'un animal, ledit détecteur comportant un logement (41 ; 410) muni d'une fenêtre (42 ; 420) sensiblement transparente audit rayonnement, ledit dispositif de traite comprenant en outre un dispositif de nettoyage (100) de manière à nettoyer la fenêtre (42 ; 420) dudit détecteur, **caractérisé en ce que** ledit dispositif de nettoyage comprend au moins une buse (120) reliée à une source de vapeur (80), en fonctionnement, la buse (120) dudit dispositif de nettoyage étant conçue pour diriger la vapeur contre la fenêtre dudit détecteur optique (40), et ledit dispositif de nettoyage (100) comprenant en outre un dispositif de pré-rinçage (160 ; 120 ; 80) conçu pour appliquer de l'eau sur ladite fenêtre du détecteur (42 ; 420) avant l'application de la vapeur.

2. Système de traite selon la revendication 1, comprenant en outre un dispositif de commande (20) conçu de façon à commander le fonctionnement dudit dispositif de nettoyage (100) et dudit détecteur optique (40 ; 400).

3. Système de traite selon la revendication 2, comprenant en outre un robot de traite muni d'au moins un bras de robot (11) conçu pour se déplacer sous le contrôle dudit dispositif de commande (20), ledit détecteur optique (40) étant monté sur ledit bras de robot.

4. Dispositif de traite selon la revendication 2 ou 3, dans lequel ledit dispositif de commande est conçu pour commander l'approvisionnement en vapeur dudit dispositif de nettoyage (100) pendant une période prédéterminée avant l'application de la vapeur sur ladite fenêtre du détecteur optique (42 ; 420) de manière à purger la condensation dudit dispositif de nettoyage (100).

5. Système de traite selon l'une quelconque des revendications précédentes, dans lequel ledit dispositif de nettoyage (100) comprend au moins deux buses (120) disposées à une distance prédéterminée de telle sorte que, en fonctionnement, lesdites buses génèrent un jet de vapeur se chevauchant.

6. Système de traite selon l'une quelconque des revendications précédentes, dans lequel ladite au moins une buse (120) est conçue pour se déplacer pendant l'application de la vapeur sur ledit détecteur optique (40).

7. Dispositif de traite selon l'une quelconque des revendications précédentes, dans lequel ladite au moins une buse est orientée de telle sorte qu'en fonctionnement, un prolongement axial de ladite au moins une buse est sensiblement perpendiculaire à ladite fenêtre du détecteur optique (42 ; 420).

8. Procédé de nettoyage de la fenêtre d'un détecteur optique faisant partie d'un système de traite, dans lequel ledit détecteur optique est conçu pour détecter le rayonnement émis et/ou réfléchi au moins partiellement par au moins une partie d'un animal, et comprend un logement (41 ; 410) muni d'une fenêtre (42 ; 420) qui est sensiblement transparente audit rayonnement, le procédé comprenant :
le nettoyage de ladite fenêtre en dirigeant la vapeur vers ladite fenêtre à partir d'au moins une buse orientée vers ladite fenêtre et le rinçage à l'eau de ladite fenêtre avant de diriger la vapeur vers ladite fenêtre.

9. Procédé selon la revendication 8, comprenant en outre, l'orientation desdites buses perpendiculaire à la surface de la fenêtre.

10. Procédé selon la revendication 8 ou 9, comprenant en outre l'opération consistant à effectuer un mouvement relatif entre la fenêtre du détecteur et la au moins une buse tout en dirigeant la vapeur contre la fenêtre.

11. Procédé selon l'une quelconque des revendications 8 à 10, comprenant en outre :
le séchage de ladite fenêtre après avoir dirigé la vapeur vers ladite fenêtre.

12. Procédé selon l'une quelconque des revendications 8 à 11, dans lequel ladite étape de rinçage comprend le rinçage de ladite fenêtre avec de l'eau purifiée.

13. Procédé selon l'une quelconque des revendications 8 à 12, comprenant en outre l'évacuation de l'eau condensée à partir desdites buses avant de diriger la vapeur vers ladite fenêtre.
